# EUROPÄISCHE PATENTANMELDUNG

(11) **EP 3 982 497 A1**
(43) Veröffentlichungstag der Anmeldung: **13.04.2022**
(21) Anmeldenummer: 20200448.7
(22) Anmeldetag: 07.10.2020
(51) Int. Cl.: H02G 3/08, H02G 3/10, H02G 3/12, H02G 3/14, H04M 1/02, H04M 11/02

(54) **ELEKTROINSTALLATIONSGERÄTESYSTEM ZUM WANDEINBAU**

(71) Anmelder: GIRA Giersiepen GmbH & Co. KG, 42477 Radevormwald (DE)
(72) Erfinder: SINGER, Anton Horatius, 88471 Laupheim (DE); BRUNS, Christian, 42349 Wuppertal (DE); BALGHEIM, Udo, 42499 Hückeswagen (DE); SCHIEFFER, Klaus, 51375 Leverkusen (DE); BUDWEG, Mario, 42499 Hückeswagen (DE)
(74) Vertreter: Dr. Solf & Zapf Patent- und Rechtsanwalts PartG mbB

(57) **Zusammenfassung**

Die vorliegende Erfindung betrifft ein Elektroinstallationsgerätesystem (1), aufweisend mindestens ein Elektroinstallationsgerät (3) zum Einbau in einer Hauswand mit einem staub- und/oder feuchtigkeitsdicht ausgebildeten Gehäuse (5) mit einem Wandmodul (7) für eine Hauswand. Das Wandmodul (7) weist einen Aufnahmeraum mit einer frontseitigen Einführöffnung und eine den Aufnahmeraum umfassende Modulwandung (13) auf. Das Elektroinstallationsgerät (3) ist in dem Aufnahmeraum des Wandmoduls (7) mit seiner in Einbaurichtung weisenden Rückwand (15) mit dem Wandmodul (7) verbunden und zwischen Außenseitenflächen (17) des Elektroinstallationsgerätes (3) und Innenseitenflächen (19) der Modulwandung (13) des Wandmoduls (7) ist ein entgegen der Einbaurichtung offener, eine Schattenfuge bildender Spalt (21) ausgebildet.

## Beschreibung

Die Erfindung betrifft ein Elektroinstallationsgerätesystem, aufweisend mindestens ein Elektroinstallationsgerät mit einem Gehäuse zum Einbau in eine Hauswand.

Bekannte Elektroinstallationsgeräte weisen in der Regel ein Gehäuse und in das Gehäuse einsetzbare Funktionselemente auf. Die Funktionselemente umfassen zum Beispiel Schalter, Taster, Steckdosen, Sensoren, Kommunikationsmodule, Anzeigemodule, Videomodule, Melder, etc.. Die Elektroinstallationsgeräte sind mit den elektrischen Leitungen des Hausnetzes, insbesondere zur Stromversorgung und Kommunikation mit anderen Elektroinstallationsgeräten, verbunden.

Die Elektroinstallationsgeräte weisen dabei Gehäuse auf, mit denen sie zumindest teilweise auf eine Wand eines Hauses aufgesetzt und mit der Wand über Schrauben befestigt werden. Ein derartiges Gehäuse ist aus der EP 3 382 833 A1 bekannt, auf die in dieser Anmeldung explizit Bezug genommen wird.

Um den elektrischen Anschluss des Elektroinstallationsgerätes zu ermöglichen, wird bei bekannten Elektroinstallationsgerätesystemen in die Hauswand eine Unterputzdose zur Aufnahme von elektrischen Leitungen und insbesondere eines Teils des Elektroinstallationsgerätes eingesetzt. Dabei wird die Unterputzdose von dem Gehäuse des Elektroinstallationsgerätes bei der Montage vollständig oder zumindest teilweise abgedeckt. Insbesondere weisen manche Gehäuse an ihrem frontseitigen Außenumfang einen Rahmenabschnitt auf, der den Übergang von Unterputzdose zur Wand überdeckt.

In einigen Fällen wird der Übergang des Gehäuses des Elektroinstallationsgerätes zu der Wand mit einem zusätzlichen, zwischen Elektroinstallationsgerät und Wand angeordneten und von dem Gehäuse gehaltenen Designrahmen abgedeckt.

Die derzeit bekannten Lösungen haben den Nachteil, dass der Übergang zwischen Unterputzdose und Wand durch das Gehäuse oder durch zusätzliche Rahmenelemente abgedeckt wird, die gegenüber der Wandfläche hervorstehen und gegenüber der Wand überstehende Flächen erzeugen. Diese können den Gesamteindruck der Hauswand, insbesondere von Außenwänden, negativ beeinflussen. Zudem ist das Elektroinstallationsgerät anfällig für Beschädigungen, zum Beispiel durch Vandalismus oder bei Transport von sperrigen Möbeln, da die hervorstehenden Flächen besonders gut als Angriffsflächen für äußere Krafteinwirkung dienen. Außerdem sind die überstehenden Flächen besonders stark der Umwelt, insbesondere Staub, Schmutz, Regen, Schnee und Sonne ausgesetzt.

Der Erfindung liegt die Aufgabe zugrunde, die oben genannten Nachteile zu vermeiden und ein Elektroinstallationsgerätesystem zur Verfügung zu stellen, bei dem sich das Elektroinstallationsgerätesystem besonders einfach in eine Wand eines Hauses montieren lässt und der Schutz des Elektroinstallationsgerätes erhöht wird.

Die Aufgabe wird erfindungsgemäß durch die Merkmale des kennzeichnenden Teils des Anspruchs 1 gelöst. Das erfindungsgemäße Elektroinstallationsgerätesystem ist durch ein Wandmodul für eine Hauswand, aufweisend einen Aufnahmeraum mit einer frontseitigen Einführöffnung und eine den Aufnahmeraum umfassende Modulwandung, gekennzeichnet. Dabei ist das Elektroinstallationsgerät in dem Aufnahmeraum des Wandmoduls mit seiner in Einbaurichtung weisenden Rückwand des Gehäuses mit dem Wandmodul verbunden. Zudem ist zwischen Außenseitenflächen des Elektroinstallationsgerätes und Innenseitenflächen der Modulwandung des Wandmoduls ein entgegen der Einbaurichtung offener, eine Schattenfuge bildender Spalt mit konstanter Breite ausgebildet. Der Spalt ist insbesondere 1 mm bis 5 mm, vorzugsweise 2 mm bis 3 mm breit ausgebildet und umgibt insbesondere das Elektroinstallationsgerät umfänglich vollständig und ununterbrochen. Vorteilhafterweise ist das Elektroinstallationsgerät mit seiner entgegen der Einbaurichtung weisenden Funktionsfläche flächenbündig zu einer die Einführöffnung des Wandmoduls begrenzende Stirnfläche der Modulwandung angeordnet.

Alternativ kann es auch vorteilhaft sein, wenn das Elektroinstallationsgerät mit seiner entgegen der Einbaurichtung weisenden Funktionsfläche mit einem Abstand von bis zu 5 mm zu einer die Einführöffnung des Wandmoduls begrenzenden Stirnfläche der Modulwandung in das Wandmodul eintaucht oder aus dem Wandmodul hervorsteht.

Eine derartige Anordnung des Elektroinstallationsgerätes ermöglicht ein besonders tiefes Eintauchen des Elektroinstallationsgerätes in die Wand des Hauses. Dabei tritt das Elektroinstallationsgerät im Gesamteindruck der Wand zurück. Gleichzeitig ist das Elektroinstallationsgerät besonders gut gegen Beschädigungen und Umwelteinflüsse geschützt. Eine in das Wandmodul eintauchende Montage erhöht die Schutzfunktion. Eine aus dem Wandmodul hervorstehende Montage kann zum Beispiel eine flächenbündige Gestaltung bei weiteren, auf die Stirnseite des Wandmoduls aufgetragenen Putz-, Dämm- oder Farbschichten im Zusammenhang mit einer endgültigen Fassadengestaltung ermöglichen. Insofern kann die Einbautiefe flexibel an die Fassadengestaltung angepasst werden, so dass eine flächenbündige oder leicht eintauchende Gestaltung gegenüber einer endgültigen Fassade ermöglicht wird.

Dabei ist es besonders vorteilhaft, wenn das Elektroinstallationsgerät mindestens ein in das Gehäuse einsetzbares Funktionselement aufweist und das Gehäuse an mindestens einer seiner umlaufenden Seitenflächen mindestens ein Verriegelungselement aufweist, wobei das jeweilige Verriegelungselement über einen Betätigungsabschnitt zwischen einer Lösestellung und einer Verriegelungsstellung bewegbar ausgebildet ist und in der Verriegelungsstellung das jeweilige Funktionselement in dem Gehäuse zumindest einseitig fixiert und in der Lösestellung das jeweilige Funktionselement freigibt, und der Betätigungsabschnitt derart ausgebildet ist, dass er sowohl in der Lösestellung als auch in der Verriegelungsstellung in den Spalt ragt. Dies ermöglicht eine besonders einfache und glatte Ausgestaltung einer frontalen Funktionsfläche, ohne besondere Verriegelungselemente auf den frontalen Funktionsflächen vorsehen zu müssen. Zudem wird dadurch das Verriegelungselement in dem Spalt versteckt und nicht ohne weiteres sichtbar und zugänglich, wodurch Vandalismus, Sabotage, Diebstahl oder ein Öffnen des Gehäuses zum Beispiel durch Kinder erschwert wird.

In einer vorteilhaften Ausführungsform weist das Gehäuse an mindestens einer seiner umlaufenden Seitenflächen eine Durchgangsbohrung mit einem Innengewinde auf und ist in der Durchgangsbohrung ein Gewindestift als Verriegelungselement angeordnet, wobei der Betätigungsabschnitt derart lang ausgebildet ist, dass der Betätigungsabschnitt in der Lösestellung und in der Verriegelungsstellung zumindest teilweise in den Spalt ragt. Vorzugsweise ist der Betätigungsabschnitt als gewindegängiger 4-kant- oder 6-kant-Werkzeugangriff ausgebildet. Dies ermöglicht eine besonders einfache und langlebige Ausbildung des Verriegelungselementes.

Insbesondere weist das Wandmodul an seinen Innenseitenflächen der Modulwandung gegenüberliegend vom Verriegelungselement mindestens eine Einbuchtung oder Tasche zum Eintauchen des Verriegelungselementes in die Modulwandung in der Lösestellung auf. Dies ermöglicht ein einfaches Einsetzen des Gehäuses in das Wandmodul mit bereits vormontiertem Gewindestift und ermöglicht einen größeren Verfahrweg des Gewindestiftes zwischen Lösestellung und Fixierstellung.

Vorzugsweise ist in der Einbuchtung/Tasche ein aus elastischem Material ausgebildeter Verschlussstopfen angeordnet. Der Verschlussstopfen ist insbesondere formschlüssig oder kraftschlüssig oder stoffschlüssig in der Einbuchtung/Tasche befestigt. Dies hat den Vorteil, dass das Verriegelungselement beim Eintauchen in die Einbuchtung/Tasche den Verschlussstopfen elastisch verformen und in diesen eintauchen kann und zumindest ein Endbereich des Verriegelungselementes von dem Material des Verschlussstopfens vor Umwelteinflüssen geschützt ist.

Vorteilhafterweise sind an den Innenseitenflächen der Modulwandung des Wandmoduls gegenüberliegend der Außenwandung des Gehäuses über den Umfang des Aufnahmeraums verteilte, in den Spalt ragende Abstandshalter und/oder Zentrieransätze ausgebildet. Dies vereinfacht die Positionierung des Gehäuses in dem Wandmodul und ermöglicht eine möglichst homogene Spaltbreite über den gesamten Umfang.

Vorzugsweise ist das Wandmodul in eine Wanddämmung einer Putzfassade integrierbar ausgebildet. Vorteilhafterweise besteht das Wandmodul zumindest teilweise aus wärmeisolierendem Material. Insbesondere ist an einer die Einführöffnung begrenzenden Stirnfläche der Modulwandung des Wandmoduls mindestens eine ein Gewebe aufweisende Anputzleiste stoffschlüssig verbunden. Dies vereinfacht die Integration in die Wand und ermöglicht eine Reduktion von Kälte- oder Wärmebrücken.

In einer weiteren vorteilhaften Ausführungsform der Erfindung weist das Elektroinstallationsgerät mehrere elektrische Funktionsmodule und einen Modulträger mit in einem Raster angeordneten Aufnahmeöffnungen zum Einsetzen der Funktionsmodule auf und ist aus mehreren Funktionsmodulen modular zusammengesetzt. Vorzugsweise fixiert dabei das Verriegelungselement den Modulträger mit mehreren eingesetzten Funktionsmodulen in der Verriegelungsstellung und gibt den Modulträger in der Lösestellung frei. Dies vereinfacht die Montage von mehreren Funktionsmodulen. Diese können zunächst außerhalb des Elektroinstallationsgerätsystems auf dem Modulträger montiert und elektrisch verbunden werden und dann anschließend zusammen mit einem Montageschritt in dem Gehäuse montiert, mit den Hausleitungen verbunden und mit einem Verriegelungselement fixiert werden.

Weitere vorteilhafte Ausgestaltungen der Erfindung ergeben sich aus der folgenden Figurenbeschreibung und den abhängigen Unteransprüchen.

Es zeigen:
- Fig. 1: eine dreidimensionale Ansicht eines erfindungsgemäßen Elektroinstallationsgerätesystems mit eingesetztem Werkzeug,
- Fig. 2: eine Frontalansicht eines erfindungsgemäßen Elektroinstallationsgerätesystems mit eingesetztem Werkzeug,
- Fig. 3: einen Schnitt B-B gemäß Fig. 2 durch ein erfindungsgemäßes Elektroinstallationsgerätesystem,

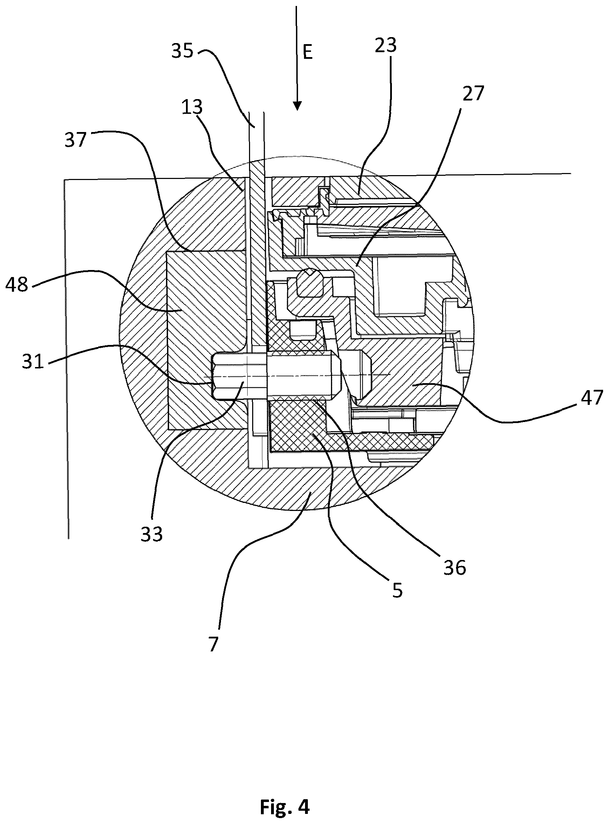

- Fig. 4: eine Vergrößerung des Schnitts B-B gemäß Fig. 2 durch ein erfindungsgemäßes Elektroinstallationsgerätesystem im Bereich des Verriegelungselementes,
- Fig. 5: einen Schnitt C-C gemäß Fig. 2 durch ein erfindungsgemäßes Elektroinstallationsgerätesystem im Bereich des Verriegelungselementes,

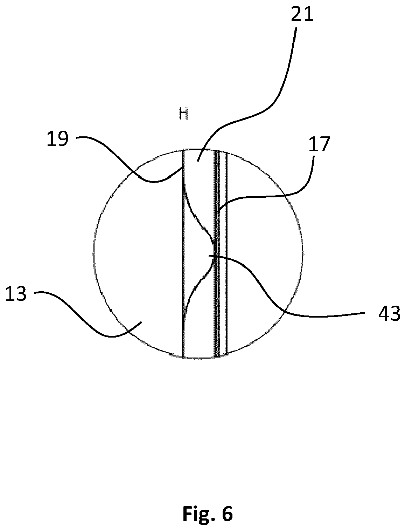

- Fig. 6: eine Vergrößerung H des Spalts gemäß Fig. 2 im Bereich eines Zentrieransatzes.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

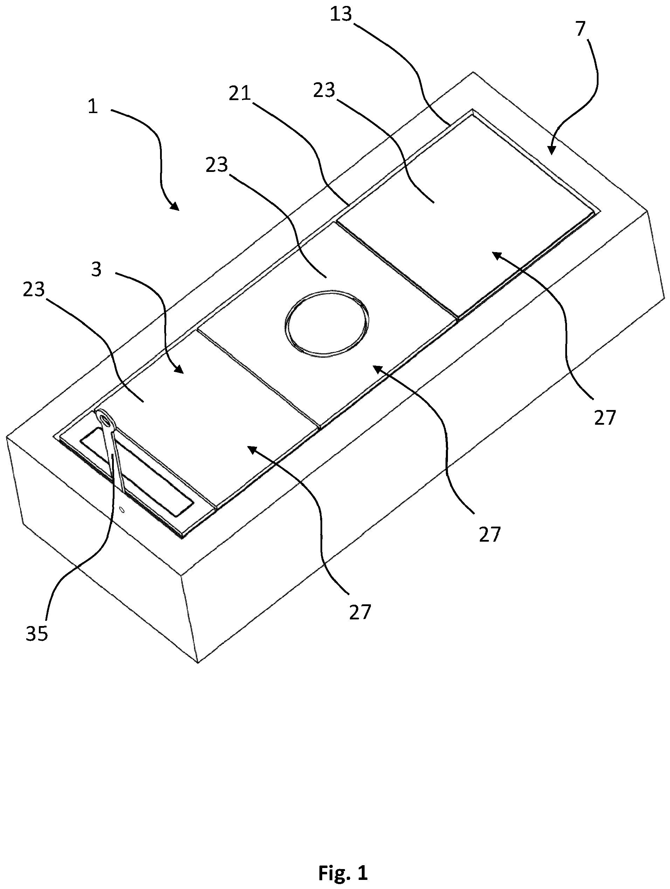

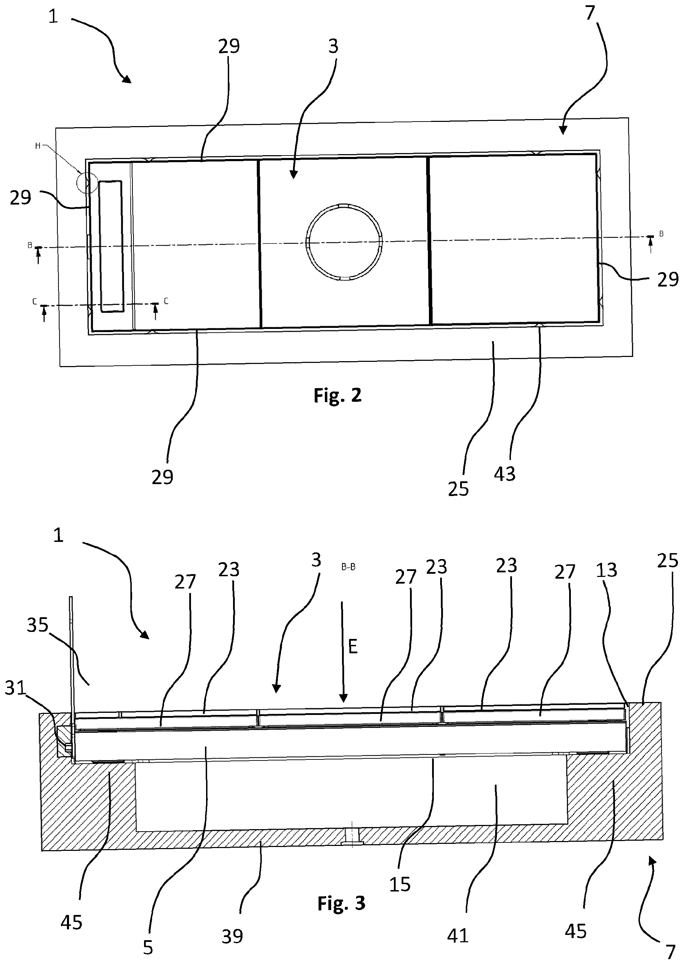

Fig. 1 bis Fig. 3 zeigen eine bevorzugte Ausführungsform eines erfindungsgemäßen Elektroinstallationsgerätesystems 1. Das Elektroinstallationsgerätesystem 1 weist ein Elektroinstallationsgerät 3 zum Einbau in eine Hauswand mit einem Gehäuse 5 und ein Wandmodul 7 für eine Hauswand auf. Das Wandmodul 7 weist einen Aufnahmeraum mit einer frontseitigen Einführöffnung und eine den Aufnahmeraum umfassende Modulwandung 13 auf. Das Wandmodul 7 ist insbesondere in eine Wanddämmung einer Putzfassade integrierbar ausgebildet. Vorzugsweise besteht das Wandmodul 7 zumindest teilweise aus wärmeisolierendem Material.

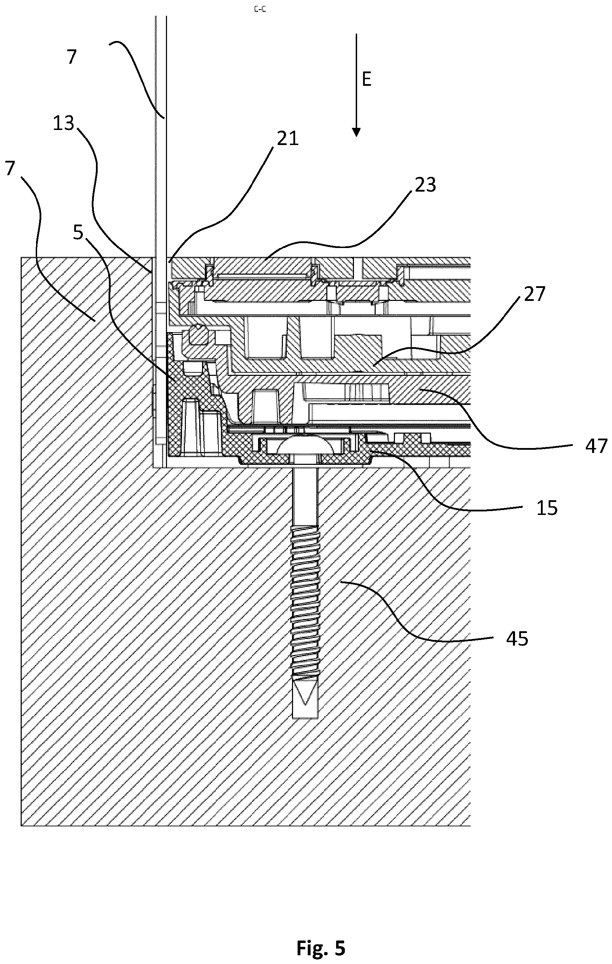

Wie insbesondere in Fig. 5 ersichtlich, ist das Elektroinstallationsgerät 3 in dem Aufnahmeraum des Wandmoduls 7 mit seiner in einer Einbaurichtung E weisenden Rückwand 15 mit dem Wandmodul 7 verbunden. Vorteilhafterweise ist an einer die Einführöffnung begrenzenden Stirnfläche der Modulwandung 13 des Wandmoduls 7 mindestens eine ein Gewebe aufweisende Anputzleiste (nicht dargestellt) stoffschlüssig verbunden.

Erfindungsgemäß ist zwischen Außenseitenflächen 17 des Elektroinstallationsgerätes 3 und Innenseitenflächen 19 der Modulwandung 13 des Wandmoduls 7 ein entgegen der Einbaurichtung E offener, eine Schattenfuge bildender Spalt 21 mit konstanter Breite ausgebildet. Der Spalt 21 ist vorzugsweise 2 mm bis 3 mm breit ausgebildet, und insbesondere umgibt der Spalt 21 das Elektroinstallationsgerät 3 umfänglich vollständig und ununterbrochen.

Vorteilhafterweise ist das Elektroinstallationsgerät 3 bezogen auf seine Höhe in Einbaurichtung E zumindest teilweise in dem Aufnahmeraum des Wandmoduls 7 angeordnet. In der dargestellten bevorzugten Ausführungsform ist das Elektroinstallationsgerät 3 mit seiner entgegen der Einbaurichtung E weisenden Funktionsfläche 23 flächenbündig zu einer die Einführöffnung des Wandmoduls 7 begrenzende Stirnfläche 25 der Modulwandung 13 oder vollständig in dem Aufnahmeraum des Wandmoduls 7 angeordnet.

Alternativ und nicht in den Figuren dargestellt kann es auch vorteilhaft sein, wenn das Elektroinstallationsgerät 3 mit seiner entgegen der Einbaurichtung weisenden Funktionsfläche 23 mit einem Abstand von bis zu 5 mm zu einer die Einführöffnung des Wandmoduls 7 begrenzenden Stirnfläche 25 der Modulwandung 13 in das Wandmodul 7 eintaucht oder aus dem Wandmodul 7 hervorsteht.

In einer bevorzugten Ausführung weist das Elektroinstallationsgerät 3 mindestens ein in das Gehäuse 5 einsetzbares Funktionsmodul 27 und das Gehäuse 5 an mindestens einer seinen umlaufenden Seitenflächen 29 mindestens ein Verriegelungselement 31 auf.

Vorzugsweise ist das jeweilige Verriegelungselement 31 über einen Betätigungsabschnitt 33 zwischen einer Lösestellung und einer Verriegelungsstellung bewegbar ausgebildet. Dabei ist in der dargestellten Ausführungsform in bevorzugter Weise der Betätigungsabschnitt in dem Spalt angeordnet.

In einer alternativen nicht dargestellten Ausführungsform kann der Betätigungsabschnitt auch in einer an der Frontseite des Elektroinstallationsgeräts angeordneten Durchgriffsöffnung, ähnlich wie bei nachrüstbaren Autoradios in einem Armaturenbrett eines Kraftfahrzeugs, angeordnet sein.

Insbesondere weist das Verriegelungselement mehrere Betätigungsabschnitte auf, die vorzugsweise zur Betätigung, insbesondere mindestens zum Lösen des Verriegelungselementes, gleichzeitig und/oder zusammen betätigt werden müssen. Vorteilhafterweise sind die verschiedenen Betätigungsabschnitte an verschiedenen umfangsgemäß verteilten Stellen des Elektroinstallationsgerätes in dem Spalt oder in mehreren frontseitigen Durchgriffsöffnungen verteilt angeordnet.

In einer vorteilhaften Ausführungsform weist das Elektroinstallationsgerät 3 mehrere elektrische Funktionsmodule 27 und einen Modulträger 47 mit in einem Raster angeordneten Aufnahmeöffnungen zum Einsetzen der Funktionsmodule 27 auf und ist aus mehreren Funktionsmodulen 27 modular zusammengesetzt. Gemäß den Fig. 1 bis Fig. 3 weist die dargestellte Ausführungsform drei Funktionsmodule auf.

In der Verriegelungsstellung fixiert das Verriegelungselement 31 das jeweilige Funktionsmodul 27 beziehungsweise den Modulträger 47 mit den eingesetzten Funktionsmodulen 27 in dem Gehäuse 5 zumindest einseitig und gibt diese in der Lösestellung frei. Vorteilhafterweise weisen die Funktionsmodule 27 und/oder weist der Modulträger 47 eine Aufnahmestelle für das Verriegelungselement 31 am Rand auf. Der Betätigungsabschnitt 33 ist derart ausgebildet, dass er sowohl in der Lösestellung als auch in der Verriegelungsstellung in den Spalt 21 ragt. Dabei ist vorzugsweise der Betätigungsabschnitt 33 des Verriegelungselementes 31 mittels eines Werkzeugs 35 durch den Spalt 21 betätigbar ausgebildet.

Besonders vorteilhaft sind die jeweiligen Funktionsmodule 27 mit ihren jeweiligen, bezogen auf das Elektroinstallationsgerät 3 außenliegenden Außenseitenflächen mit Außenflächen des Gehäuses 3 fluchtend ausgebildet und verschließen das Gehäuse 3.

Vorzugsweise weist das Gehäuse 5 an mindestens einer seiner umlaufenden Seitenflächen 29 eine Durchgangsbohrung 36 mit einem Innengewinde auf. Insbesondere ist in der Durchgangsbohrung 36 ein Gewindestift als Verriegelungselement 31 angeordnet, wobei der Betätigungsabschnitt 33 derart lang ausgebildet ist, dass der Betätigungsabschnitt 33 in der Lösestellung und in der Verriegelungsstellung zumindest teilweise in den Spalt 21 ragt. Vorteilhafterweise ist der Betätigungsabschnitt 33 als gewindegängiger 4-kant- oder 6-kant-Werkzeugangriff ausgebildet.

In einer vorteilhaften Ausführungsform weist das Wandmodul an seinen Innenseitenflächen 19 der Modulwandung 13 gegenüberliegend vom Verriegelungselement 31 Einbuchtungen 37 zum Eintauchen des Verriegelungselementes 31 in der Lösestellung auf.

Vorzugsweise ist in der Einbuchtung 37 ein aus elastischem Material ausgebildeter Verschlussstopfen 48 angeordnet. Der Verschlussstopfen 48 ist insbesondere formschlüssig oder kraftschlüssig oder stoffschlüssig in der Einbuchtung 37 befestigt. Dies hat den Vorteil, dass das Verriegelungselement 31 beim Eintauchen in die Einbuchtung den Verschlussstopfen 31 elastisch verformen und in diesen eintauchen kann und zumindest ein Endbereich des Verriegelungselementes 31 von dem Material des Verschlussstopfens 48 vor Umwelteinflüssen geschützt ist.

Insbesondere ist zwischen dem eingesetzten Elektroinstallationsgerät 3 und einem Boden 39 des Aufnahmeraums des Wandmoduls 7 ein Hohlraum 41 für die Aufnahme von elektrischen Leitungen ausgebildet. Weiterhin vorteilhaft sind an den Innenseitenflächen 19 der Modulwandung 13 gegenüberliegend der Außenwandung des Gehäuses 5 über den Umfang des Aufnahmeraums verteilte, in den Spalt 21 ragende Abstandshalter und/oder Zentrieransätze 43 ausgebildet.

Vorzugsweise weist das Wandmodul 7 an den Innenseitenflächen 19 der Modulwandung 13 Befestigungsansätze 45 zur Auflage des Gehäuses 5 auf. In den Befestigungsansätzen 45 sind Befestigungsvorrichtungen zur Befestigung des Gehäuses 5 angeordnet.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein.

Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Elektroinstallationsgerätesystem
- 3: Elektroinstallationsgerät
- 5: Gehäuse
- 7: Wandmodul
- 13: Modulwandung
- 15: Rückwand
- 17: Außenseitenflächen
- 19: Innenseitenflächen
- 21: Spalt
- 23: Funktionsfläche
- 25: Stirnfläche
- 27: Funktionsmodul
- 29: Seitenflächen
- 31: Verriegelungselement
- 33: Betätigungsabschnitt
- 35: Werkzeug
- 36: Durchgangsbohrung
- 37: Einbuchtung
- 39: Boden
- 41: Hohlraum
- 43: Zentrieransatz
- 45: Befestigungsansätze
- 47: Modulträger
- 48: Verschlussstopfen

## Patentansprüche

1. Elektroinstallationsgerätesystem (1), aufweisend mindestens ein Elektroinstallationsgerät (3) zum Einbau in einer Hauswand mit einem Gehäuse (5),
**gekennzeichnet durch**
ein Wandmodul (7) für eine Hauswand, aufweisend einen Aufnahmeraum mit einer frontseitigen Einführöffnung und eine den Aufnahmeraum umfassende Modulwandung (13), wobei das Elektroinstallationsgerät (3) in dem Aufnahmeraum des Wandmoduls (7) mit seiner in Einbaurichtung weisenden Rückwand (15) des Gehäuses (5) mit dem Wandmodul (7) verbunden ist und zwischen Außenseitenflächen (17) des Gehäuses (5) des Elektroinstallationsgerätes (3) und Innenseitenflächen (19) der Modulwandung (13) des Wandmoduls (7) ein entgegen der Einbaurichtung offener, eine Schattenfuge bildender Spalt (21) mit konstanter Breite ausgebildet ist.

2. Elektroinstallationsgerätesystem (1) nach Anspruch 1,
**dadurch gekennzeichnet, dass**
der Spalt (21) 2 mm bis 3 mm breit ausgebildet ist.

3. Elektroinstallationsgerätesystem nach Anspruch 1 oder 2,
**dadurch gekennzeichnet, dass**
der Spalt (21) das Elektroinstallationsgerät (3) umfänglich vollständig und ununterbrochen umgibt.

4. Elektroinstallationsgerätesystem (1) nach einem der Ansprüche 1 bis 3,
**dadurch gekennzeichnet, dass**
das Wandmodul (7) als Fassadenmodul ausgeführt ist und in eine Wand, insbesondere eine Wanddämmung einer Wand, einer Putzfassade integrierbar ausgebildet ist.

5. Elektroinstallationsgerätesystem (1) nach einem der Ansprüche 1 bis 4,
**dadurch gekennzeichnet, dass**
das Elektroinstallationsgerät (3), bezogen auf seine Höhe in Einbaurichtung zumindest teilweise in dem Aufnahmeraum des Wandmoduls (7) angeordnet ist.

6. Elektroinstallationsgerätesystem (1) nach einem der Ansprüche 1 bis 5,
**dadurch gekennzeichnet, dass**
das Elektroinstallationsgerät (3) mit seiner entgegen der Einbaurichtung weisenden Funktionsfläche (23) flächenbündig zu einer die Einführöffnung des Wandmoduls (7) begrenzenden Stirnfläche (25) der Modulwandung (13) angeordnet ist.

7. Elektroinstallationsgerätesystem (1) nach einem der Ansprüche 1 bis 5,
**dadurch gekennzeichnet, dass**
das Elektroinstallationsgerät (3) mit seiner entgegen der Einbaurichtung weisenden Funktionsfläche (23) mit einem Abstand von bis zu 5 mm zu einer die Einführöffnung des Wandmoduls (7) begrenzenden Stirnfläche (25) der Modulwandung (13) in das Wandmodul (7) eintaucht oder aus dem Wandmodul (7) hervorsteht.

8. Elektroinstallationsgerätesystem (1) nach einem der Ansprüche 1 bis 7,
**dadurch gekennzeichnet, dass**
das Elektroinstallationsgerät (3) mindestens ein in das Gehäuse (5) einsetzbares Funktionselement (27) aufweist und das Gehäuse (5) an mindestens einer seiner umlaufenden Seitenflächen (29) mindestens ein Verriegelungselement (31) aufweist, wobei das jeweilige Verriegelungselement (31) über einen Betätigungsabschnitt (33) zwischen einer Lösestellung und einer Verriegelungsstellung bewegbar ausgebildet ist und in der Verriegelungsstellung das jeweilige Funktionselement (27) in dem Gehäuse (5) zumindest einseitig fixiert und in der Lösestellung das jeweilige Funktionselement (27) freigibt, und der Betätigungsabschnitt (33) derart ausgebildet ist, dass er sowohl in der Lösestellung als auch in der Verriegelungsstellung in den Spalt (21) ragt.

9. Elektroinstallationsgerätesystem (1) nach Anspruch 8,
**dadurch gekennzeichnet, dass**
der Betätigungsabschnitt (33) mittels eines Werkzeugs (35) durch den Spalt (21) betätigbar ausgebildet ist.

10. Elektroinstallationsgerätesystem (1) nach Anspruch 8 oder 9,
**dadurch gekennzeichnet, dass**
das Gehäuse (5) an mindestens einer seiner umlaufenden Seitenflächen (29) eine Durchgangsbohrung (36) mit einem Innengewinde aufweist und in der Durchgangsbohrung (36) ein Gewindestift als Verriegelungselement angeordnet ist, wobei der Betätigungsabschnitt (33) derart lang ausgebildet ist, dass der Betätigungsabschnitt (33) in der Lösestellung und in der Verriegelungsstellung zumindest teilweise in den Spalt ragt.

11. Elektroinstallationsgerätesystem (1) nach Anspruch 10,
**dadurch gekennzeichnet, dass**
der Betätigungsabschnitt (33) als gewindegängiger 4-kant- oder 6-kant-Werkzeugangriff ausgebildet ist.

12. Elektroinstallationsgerätesystem (1) nach einem der Ansprüche 8 bis 11,
**dadurch gekennzeichnet, dass**
das Wandmodul (7) an seinen Innenseitenflächen (19) der Modulwandung (13) gegenüberliegend vom Verriegelungselement (31) Einbuchtungen (37) oder Taschen zum Eintauchen des Verriegelungselementes (31) in der Lösestellung aufweist.

13. Elektroinstallationsgerätesystem (1) nach Anspruch 12,
**dadurch gekennzeichnet, dass**
in der Einbuchtung (37) ein aus elastischem Material ausgebildeter Verschlussstopfen (48) angeordnet ist.

14. Elektroinstallationsgerätesystem (1) nach einem der Ansprüche 1 bis 13,
**dadurch gekennzeichnet, dass**
zwischen dem eingesetzten Elektroinstallationsgerät (3) und einem Boden des Aufnahmeraums des Wandmoduls (7) ein Hohlraum (41) für die Aufnahme von elektrischen Leitungen ausgebildet ist.

15. Elektroinstallationsgerätesystem (1) nach einem der Ansprüche 1 bis 14,
**dadurch gekennzeichnet, dass**
an den Innenseitenflächen (19) der Modulwandung (13) gegenüberliegend der Außenwandung des Gehäuses (5) über den Umfang des Aufnahmeraums verteilte, in den Spalt (21) ragende Abstandshalter und/oder Zentrieransätze (43) ausgebildet sind.

16. Elektroinstallationsgerätesystem (1) nach einem der Ansprüche 1 bis 15,
**dadurch gekennzeichnet, dass**
das Wandmodul (7) an den Innenseitenflächen (19) der Modulwandung (13) Befestigungsansätze (45) zur Auflage des Gehäuses (5) aufweist und in den Befestigungsansätzen (45) Befestigungsvorrichtungen zur Befestigung des Gehäuses (5) angeordnet sind.

17. Elektroinstallationsgerätesystem (1) nach einem der Ansprüche 1 bis 16,
**dadurch gekennzeichnet, dass**
das Wandmodul (7) zumindest teilweise aus wärmeisolierendem Material besteht.

18. Elektroinstallationsgerätesystem (1) nach einem der Ansprüche 1 bis 17,
**dadurch gekennzeichnet, dass**
an einer die Einführöffnung begrenzenden Stirnfläche (25) der Modulwandung (13) des Wandmoduls (7) mindestens eine ein Gewebe aufweisende Anputzleiste stoffschlüssig verbunden ist.

19. Elektroinstallationsgerätesystem (1) nach einem der Ansprüche 1 bis 18,
**dadurch gekennzeichnet, dass**
das Elektroinstallationsgerät (3) mehrere elektrische Funktionselemente (23) und einen Modulträger (47) mit in einem Raster angeordneten Aufnahmeöffnungen zum Einsetzen der Funktionselemente (23) aufweist und aus mehreren Funktionselementen (23) modular zusammengesetzt ist.

20. Elektroinstallationsgerätesystem (1) nach Anspruch 19,
**dadurch gekennzeichnet, dass**
das Verriegelungselement (31) den Modulträger (47) mit mehreren eingesetzten Funktionselementen (27) in der Verriegelungsstellung fixiert und in der Lösestellung freigibt.

21. Elektroinstallationsgerätesystem (1) nach einem der Ansprüche 8 bis 20,
**dadurch gekennzeichnet, dass**
die jeweiligen Funktionselemente (27) mit ihren jeweiligen, bezogen auf das Elektroinstallationsgerät (3) außenliegenden Außenseitenflächen (17) mit Außenflächen des Gehäuses (5) fluchtend ausgebildet sind und das Gehäuse (5) verschließen.
